(19) **Europäisches Patentamt / European Patent Office / Office européen des brevets**

(11) **EP 4 521 002 A1**

(12) **EUROPEAN PATENT APPLICATION**

(43) Date of publication:
**12.03.2025 Bulletin 2025/11**

(21) Application number: **24191051.2**

(22) Date of filing: **26.07.2024**

(51) International Patent Classification (IPC):
**F16H 61/02** *(2006.01)*

(52) Cooperative Patent Classification (CPC):
**F16H 61/0213**; B60W 40/076; B60W 40/13;
B60Y 2200/142; F16H 59/18; F16H 59/36;
F16H 59/48; F16H 59/52; F16H 59/70;
F16H 2059/142; F16H 2059/663; F16H 2061/0223

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023 CN 202311148917**

(71) Applicant: **Robert Bosch GmbH**
**70442 Stuttgart (DE)**

(72) Inventors:
• **TAO, Chengjun**
**Jiangsu, 214000 (CN)**
• **JIA, Yunlong**
**Jiangsu, 214000 (CN)**
• **WEI, Bo**
**Jiangsu, 214000 (CN)**
• **NI, Fanfan**
**Jiangsu, 214000 (CN)**
• **ZHANG, Hantian**
**Jiangsu, 214000 (CN)**

(54) **METHOD, APPARATUS, DEVICE, VEHICLE, AND MEDIUM FOR DETERMINING SHIFT POINT OF VEHICLE**

(57) Embodiments of the present disclosure relate to a method, an apparatus, a device, a vehicle, and medium for determining a shift point of a vehicle. The method includes determining the slope drag of the vehicle based on the drive force, rolling resistance, air resistance, and acceleration resistance of the vehicle. The method further includes determining the slope indication value for the vehicle based on the slope drag and reference mass of the vehicle, wherein the slope indication value is associated with the slope of the vehicle. Further, the method further includes determining a target shift point of the vehicle in slope condition based on the slope indication value, and the gear and throttle opening of the vehicle. Through the method according to the examples of the present disclosure, in the absence of a slope sensor and a gravity sensor, the appropriate shift point of the vehicle can also be determined based on the slope indication value to optimize the shift point and the shifting force, improve the shift quality, and avoid shifting failures and other serious driving faults.

300B

Fig. 3b

EP 4 521 002 A1

**Description**

Technical Field

Embodiments of the present disclosure relate to the field of computers, and more particularly, to a method, an apparatus, a device, a vehicle, and a medium for determining a shift point of the vehicle.

Background Art

In the multi-gear transmission technology of vehicles, consideration of real-time changes in terms of road slope, vehicle weight, and the like, has become a critical adjustment element. With sensors that accurately perceive road conditions and vehicle conditions, the system is able to continuously collect data and combine it with a preset algorithm to determine the optimal shifting timing and shifting intensity. Such intelligent transmission control not only ensures smooth power output and driving comfort, but also maximizes power usage and increases energy efficiency.

Therefore, for different types of multi-gear transmissions, such as conventional fuel vehicles and electric vehicles, fine-adjustment of the shift line to optimize the shift quality is of great importance. This optimization involves a variety of considerations, including the stability of power output, fuel economy, driving comfort, and the like. With accurate control of shifting timing and intensity, the system is capable of achieving optimal performance in different driving scenarios, improving vehicle acceleration response and minimizing energy waste, resulting in a better driving experience for users.

Summary of the Invention

The examples of the present disclosure provide a method, an apparatus, a device, a vehicle, and a medium for determining a shift point of the vehicle.

According to a first aspect of the present disclosure, a method for determining a shift point of a vehicle is provided. The method includes determining the slope drag of the vehicle based on the drive force, rolling resistance, air resistance, and acceleration resistance of the vehicle. The method further includes determining the slope indication value for the vehicle based on the slope drag and reference mass of the vehicle, wherein the slope indication value is associated with the slope of the vehicle. Further, the method further includes determining a target shift point of the vehicle in slope condition based on the slope indication value, and the gear and throttle opening of the vehicle.

According to a second aspect of the present disclosure, an apparatus for determining a shift point of a vehicle is provided. The apparatus includes a slope drag determination unit, which is configured to determine the slope drag of the vehicle based on the drive force, rolling resistance, air resistance, and acceleration resistance of the vehicle. The apparatus further includes a slope indication value determination unit, which is configured to determine the slope indication value for the vehicle based on the slope drag and reference mass of the vehicle, wherein the slope indication value is associated with the slope of the vehicle. Further, the apparatus further includes a target shift point determination unit, which is configured to determine a target shift point of the vehicle in slope condition based on the slope indication value, and the gear and throttle opening of the vehicle.

According to a third aspect of the present disclosure, an electronic device is provided. The electronic device includes at least one controller; and a memory coupled to the at least one controller and having instructions stored thereon that, when executed by the at least one controller, cause the device to perform the steps of the method according to the first aspect of the present disclosure.

According to a fourth aspect of the present disclosure, a vehicle including the electronic device according to the third aspect of the present disclosure is provided.

According to a fifth aspect of the present disclosure, a computer-readable storage medium is provided. The computer-readable storage medium has computer-executable instructions stored thereon, wherein the computer-executable instructions are capable of being executed by a controller to perform the steps of the method according to the first aspect of the present disclosure.

Description of Accompanying Drawings

The exemplary examples of the present disclosure will be described in further detail in conjunction with accompanying drawings in order to further clarify the above-mentioned and other objectives, features and advantages of the present disclosure, wherein in the exemplary examples of the present disclosure, the same reference number typically represents the same parts.

Fig. 1 illustrates a schematic diagram of an exemplary environment in which a device and/or a method according to an example of the present disclosure may be implemented;

Fig. 2 illustrates a flow chart of a method for determining a shift point for a vehicle according to an example of the present disclosure;

Fig. 3A illustrates a flow chart of a method for determining the slope indication value according to an example of the present disclosure;

Fig. 3B shows a schematic diagram of a force analysis of a vehicle on a ramp according to an example of the present disclosure

Fig. 4A is a flow chart of a method for determining a target shift point according to an example of the present disclosure;

Fig. 4B is a schematic diagram of a shift line according to an example of the present disclosure;

Fig. 5 is a flow chart of a method for adjusting the slope indication value according to an example of the present disclosure;

Fig. 6 illustrates a schematic diagram of an apparatus for determining a target shift point according to an example of the present disclosure;

Fig. 7 illustrates a schematic block diagram of an exemplary device according to an example that is suitable to embody the content of the present disclosure.

In the accompanying drawings, the same or corresponding numbers represent the same or corresponding portions.

Specific Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure. The examples of the present disclosure described below with reference to the accompanying drawings are for exemplary purposes only.

Typically, the initial shift line of a vehicle is calibrated for the vehicle in working conditions on a flat road with no load. Therefore, such an initial shift line is not suitable for use in working conditions on a slope and with load. This is due to the need to increase traction when the slope and vehicle weight increase, so the actual shift line requires speed compensation based on initial shift line. In working conditions on a slope and with load, the shift point needs to be adjusted based on the slope value and vehicle weight. However, many vehicles, particularly electric heavy-duty trucks, do not have a slope sensor and gravity sensor, so the shifting operation of the transmission can only be carried out based on the shift point and shifting force of the initial shift line, which may result in failed shifting and may in turn lead to other serious driving faults.

To this end, the examples of the present disclosure propose a solution for determining a target shift point based on the slope indication value, wherein the slope indication value comprehensively considers the factors of slope and vehicle weight, and the shift line is adjusted based on the slope indication value. Suitable shift points and shifting forces for different slopes and loads may be used for the shifting operation of the vehicle to improve the shift quality and avoid shifting failures and other serious driving faults. The slope indication value may also be referred to as a generalized slope. Although the slope indication value is not equivalent to the actual slope, it may indicate the degree of the slope. Therefore, through the solution proposed in the examples of the present disclosure, in the absence of a slope sensor and a gravity sensor, the target shift point of the vehicle may also be determined based on the slope indication value to optimize the shift point and the shifting force, improve the shift quality, and avoid shifting failures and other serious driving faults. Further, data acquisition costs are reduced while computational efficiency is improved as the calculation of the slope indication value does not require additional data from other sensors.

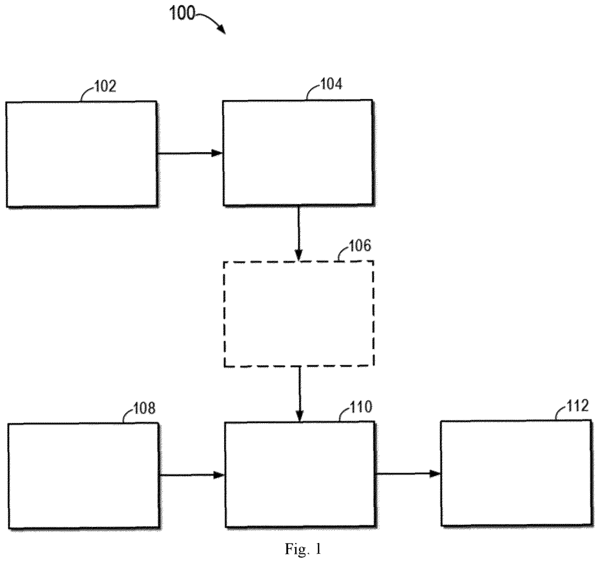

The examples of the present disclosure will be described in further detail below in conjunction with the accompanying drawings, wherein Fig. 1 illustrates a schematic diagram of an exemplary environment 100 in which a device and/or a method according to an example of the present disclosure may be implemented;

As shown in Fig. 1, the exemplary environment 100 includes a vehicle control unit (VCU) 102, which is a critical automotive electronic control unit that coordinates and manages a variety of critical systems of a vehicle to ensure vehicle safety, performance, and efficiency. The VCU implements real-time monitoring and accurate control of the vehicle drive process by integrating a plurality of sensors, actuators, and control strategies. The VCU 102 may be used to obtain corresponding vehicle parameters as well as environmental parameters, including but not limited to transmission ratio, tire radius, vehicle curb weight, air density, wind-facing area of vehicle, and the like, and these parameters may be used to calculate vehicle drive parameters such as drive force, rolling resistance, air resistance, slope drag, and acceleration resistance. Further, the VCU 102 may have a plurality of functions, such as power management, drive mode switching, vehicle stability control, intelligent driving assistance, troubleshooting and maintenance.

In some examples, the throttle opening of the vehicle is obtained through the VCU 102 and is used to adjust the slope indication value to determine the corresponding shift point. For example, after determining the slope indication value corresponding to the driving slope and vehicle weight of the vehicle (sum of empty and loaded vehicle), an optimized shift line is obtained, at which point the corresponding shift point needs to be obtained according to the vehicle speed and the throttle opening, and the corresponding shift point may also change as the throttle opening changes. For example, 20 km/h may be used as the shift point of a vehicle for upshifting from the first gear to the second gear when the throttle opening is 10%; while 25 km/h may be used as the shift point of the vehicle for upshifting from the first gear to the second gear when the throttle opening is 40%. It should be understood that the shift point typically does not change when the throttle opening is greater than 80%, for example, 80% - 100%, because at this point it is very difficult for the driver to perceive the difference between 80% and 100% of throttle opening. Further, the VCU 102 also needs to be involved in scenarios such as energy management of electric vehicles, vehicle stability improvement, and intelligent safety assistance.

In some examples, the calculated slope indication value is adjusted by obtaining the brake opening of the vehicle through the VCU 102. For example, when a driver is detected to be performing a braking operation through the VCU 102, some vehicle drive parameters change (e.g., speed, acceleration, and the like of the vehicle), thereby affecting the calculation of the slope indication value, at which point the previously calculated slope indication value will need to continue to be used.

As shown in Fig. 1, the exemplary environment 100 further includes a transmission control unit (TCU) 104, which is a critical component of the automotive electronic control system and is responsible for accurate management and adjustment of the transmission operation of the vehicle, and incorporates sensor data and algorithms to intelligently control the shifting timing, shifting sequence, and shifting process of the transmission. The TCU 104 can be used to obtain the corresponding vehicle parameters, including but not limited to engine torque, gear state, vehicle speed, and the like, and these parameters can be used to calculate vehicle drive parameters such as drive force, rolling resistance, air resistance, slope drag, and acceleration resistance. Further, the TCU 104 may have a plurality of functions, such as intelligent shifting strategies, drive mode adaptations, downhill assist control, start and stop system coordination, troubleshooting and protection, and the like.

In some examples, the gear state of the vehicle is obtained through the TCU 104 and is used to adjust the slope indication value to determine the corresponding shift point. For example, when the vehicle is determined to be in the shifting process through the TCU 104, for example, upshifting from the second gear to the third gear, some vehicle parameters change, for example, because the engine does not transmit torque during the shifting process, the drive force is 0. As a result, the slope indication value of the vehicle cannot be calculated during the shifting process. Hence, the previously calculated slope indication value needs to continue to be used. It should be understood that the entire shifting process is very fast and is typically completed within a few seconds, thus having little impact on the calculation of the slope indication value. Further, in some other scenarios, the TCU 104 may also be involved, including but not limited to intelligent shift adaptation, multi-mode driving, automatic downhill control, and the like.

As shown in Fig. 1, the exemplary environment 100 further includes a controller 106, which may include but is not limited to a motor control unit (MCU), an electronic control unit (ECU), and the like. The controller 106 calculates the slope indication value for the vehicle on the current slope and with the current load based on the vehicle parameters and environmental parameters obtained through the VCU 102 and the TCU 104. In some examples, the controller 106 is capable of calculating the current drive force of the vehicle with the transmission ratio and tire radius obtained through the VCU 102 and the engine torque obtained through the TCU 104. The drive force is an important parameter in the calculation of the slope indication value. The controller 106 is capable of calculating the slope indication value 110 through the drive force and other vehicle drive parameters. Further, in some examples, the controller 106 is a controller on a cloud service outside a vehicle, such as a cloud control platform. The cloud control platform integrates sensing, communication, computing, control and other technologies, receives the relevant parameters from the vehicle based on the standardized communication protocol, obtains the slope indication value 110 upon completion of the calculation and transmits it to the controller of the vehicle. Further, in some examples, the controller 106 is not required, but rather the calculation of the slope indication value can be completed in the TCU 104.

As shown in Fig. 1, the exemplary environment 100 further includes an initial shift line 108 that is obtained when the vehicle is on a flat road and with no load. In vehicles equipped with a continuously variable transmission (AT/AMT/DCT), the function of the continuously variable transmission in implementing engine operating characteristic matching is implemented by shifting, so setting the shift line (including upshift point and downshift point) directly affects the fuel economy, dynamic property and driving performance of the entire vehicle. Further, on a slope and with load, if the initial shift line 108 is still used for the shifting operation, this may result in failed shifting and may in turn lead to other serious driving faults. The shift point 112 corresponding to the slope indication value 110 may be obtained based on the initial shift line 108 and the previously calculated slope indication value 110. For example, the current actual slope is 20% and the vehicle's load is 50 tons, but the vehicle itself cannot obtain the slope and load due to the absence of a slope sensor and gravity sensor. However, the slope indication value is determined by the calculation to be 30%, so a shifting operation may be performed using the shift point corresponding to the 30% slope indication value.

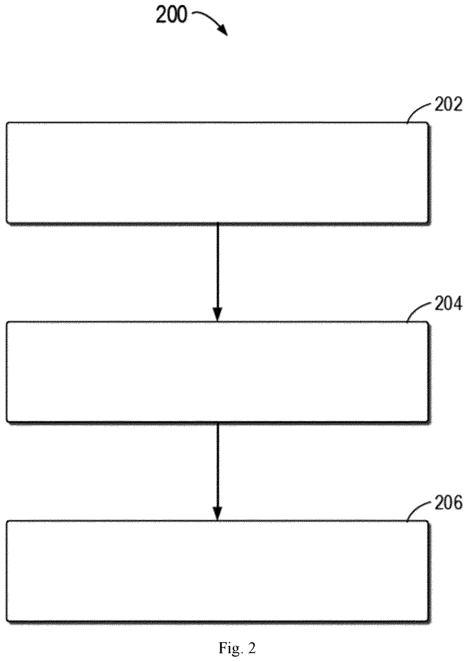

An exemplary environment 100 in which an apparatus and/or a method according to an example of the present disclosure may be implemented is described above in conjunction with Fig. 1. A flow chart of a method 200 for determining a shift point for a vehicle according to an example of the present disclosure is described below in conjunction with Fig. 2.

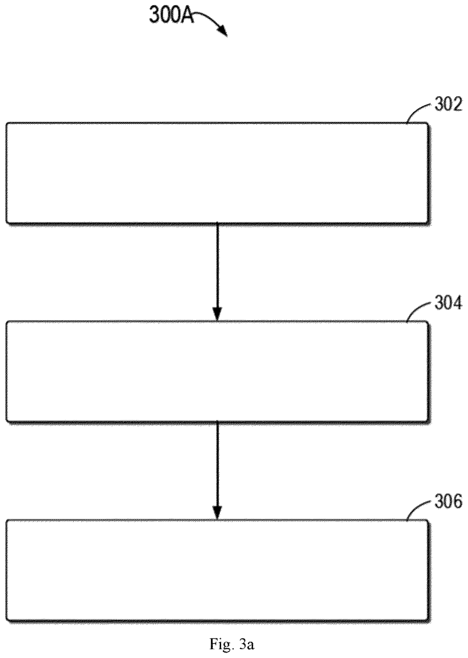

In block 202, the slope drag of the vehicle is determined based on the drive force, rolling resistance, air resistance, and acceleration resistance of the vehicle. For example, the drive force, rolling resistance, air resistance, and acceleration resistance of the vehicle are obtained through the VCU 102 and TCU 104 as shown in Fig. 1. The slope drag of the vehicle is determined based on the obtained drive force, rolling resistance, air resistance, and acceleration resistance. Each force may be obtained in a number of ways, one of which is through the specific formula described below for obtaining those forces, in conjunction with Fig. 3A.

In block 204, the slope indication value for the vehicle is determined based on the slope drag and reference mass of the vehicle, wherein the slope indication value is associated with the slope of the vehicle. For example, the slope of the vehicle refers to the actual slope at which the vehicle is on and the slope drag is associated with the actual slope, but the actual slope cannot be obtained directly due to the absence of a slope sensor, so the slope drag is calculated based on the plurality of forces described above. The reference mass is the empty vehicle mass of the vehicle, which can be directly obtained without being determined by using a gravity sensor. The slope indication value is not the actual slope value but is related to the actual slope. Based on the slope drag and the empty vehicle mass, the slope indication value for the vehicle is determined without requiring a slope sensor and gravity sensor.

In block 206, a target shift point for the vehicle in slope condition is determined based on the slope indication value, and the gear and throttle opening of the vehicle. For example, based on the slope indication value, the slope size related to the actual slope may be determined, and the gear of the vehicle indicates the gear state of the vehicle. For example, the current gear of the vehicle is the second gear. If an upshift operation is performed, the gear is upshifted to the third gear. Different gears correspond to different shift points. The throttle opening indicates the position of the accelerator pedal, varying between 0% and 100%, with different throttle openings corresponding to different shift points. Therefore, when determining the target shift point, it is necessary to consider both the slope indication value, the gear, and the throttle opening.

In this way, the method 200 is capable of determining the slope indication value of the vehicle without requiring slope and gravity sensors and determining the target shift point of the vehicle based on the slope indication value to improve the shift quality of the vehicle in working conditions on a certain slope and with load to avoid shifting failures and other serious driving faults.

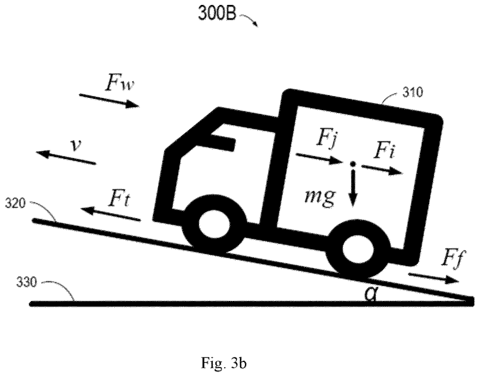

Fig. 3A shows a flow chart of a method 300A for determining the slope indication value according to an example of the present disclosure. Fig. 3B shows a schematic diagram of a force analysis 300B of a vehicle on a ramp according to an example of the present disclosure. The process of the method 300A for determining the slope indication value is described below in conjunction with the force analysis 300B.

First, in block 302, the vehicle motion equation for a vehicle on a ramp is determined through a force analysis of the vehicle, wherein the vehicle motion equation includes drive force, rolling resistance, air resistance, slope drag, and acceleration resistance. These forces are obtained or calculated through the VCU 102 and TCU 104 in conjunction with Fig. 1. In conjunction with Fig. 3B, the vehicle 310 is driven on a ramp 320 at an angle $\alpha$ between the ramp 320 and the flat road 330, i.e., the actual slope is $\alpha$, so the vehicle motion equation is as shown in Equation 1:

$$F_t = F_f + F_w + F_i + F_j \qquad (1)$$

wherein $F_t$ is the drive force, and $F_t = \frac{T i_0 \eta}{r}$ , wherein $T$ is the engine torque (e.g., obtained with the TCU 104 in Fig. 1), $i_0$ is the transmission ratio, $\eta$ is the efficiency value, and r is the tire radius. $Ff$ is rolling resistance, and $F_f = mqf \cos \alpha$, wherein $m$ is the empty vehicle weight, g is the gravitational acceleration, and $f$ is the rolling resistance coefficient. F w is the

$$F_w = \frac{1}{2} \rho A C_D v^2$$

air resistance, and , wherein $\rho$ is the air density, $A$ is the wind-facing area of the vehicle, $C_D$ is the air resistance coefficient, and v is the vehicle speed. $F_i$ is the slope drag, and $F_i = mg \sin \alpha$, wherein $m$ is the empty vehicle weight, g is the gravitational acceleration, and ▲ is the actual slope value (in conjunction with the slope $\alpha$ shown in Fig. 3B).

$$F_j = \delta m \frac{dv}{dt}$$

$F_j$ is the acceleration resistance and , wherein $m$ is the empty vehicle weight and $\delta$ is the rotational mass coefficient. It should be understood that the slope is shown as $\alpha$ in Fig. 3B, and $\alpha$ cannot be obtained directly in actual use due to the absence of a slope sensor.

In block 302, the vehicle motion equation is processed. The parameters described above are bought into Equation 1 and the formula is organized to obtain Equation 2 as shown below:

$$\frac{Ti_0\eta}{r} = mgf\cos\alpha + \frac{1}{2}\rho AC_D v^2 + mg\sin\alpha + \sigma m\frac{dv}{dt} \qquad (2)$$

The relationship between the slope $\alpha$ and other parameters may be obtained by introducing the slope in Equation 2 along with the series of parameters described above. In some examples, as the slope $\alpha$ is typically relatively small, the slope $\alpha$ cosine value is set to 1, i.e., $\cos\alpha \approx 1$. Further, since the first $mgf\cos\alpha$ in Equation 2 is typically relatively small, the effect of setting the cosine value to 1 also has little overall impact.

In block 303, the tangent value of the slope indication value is determined. Equation 3 below may be obtained from Equation 2 by substituting the slope indication value $\theta$ for the actual slope $\alpha$ and making the corresponding mathematical changes:

$$\tan\theta = \left(\frac{Ti_0\eta}{r} - mgf - \frac{1}{2}\rho AC_D v^2 - \sigma m\frac{dv}{dt}\right)\Big/mg \qquad (3)$$

It can be seen from Equation 3 that the calculation of the slope indication value $\theta$ does not require the use of a slope sensor and gravity sensor, nor does it require other additional sensors. Further, through Equation 3, the tangent value of the slope indication value $\theta$ may be calculated to obtain the slope indication value $\theta$. It should be understood that the slope indication value $\theta$ is greater than the actual slope $\alpha$ because the slope indication value takes into account the weight of the vehicle, and the following discussion also indicates that the slope indication value $\theta$ is greater than the actual slope $\alpha$. The corresponding slope indication value is obtained when the tangent value of the slope indication value is obtained.

In some examples, the vehicle load is $\Delta m$, so the actual vehicle weight is $m + \Delta m$. Equation 4 below may be obtained from the vehicle motion equation:

$$\frac{Ti_0\eta}{r} = (m + \Delta m)gf\cos\alpha + \frac{1}{2}\rho AC_D v^2 + (m + \Delta m)g\sin\alpha + \delta(m + \Delta m)\frac{dv}{dt} \qquad (4)$$

Equation 5 below may be obtained by mathematical transformation:

$$\frac{Ti_0\eta}{r} - mgf\cos\alpha - \frac{1}{2}\rho AC_D v^2 - \delta m\frac{dv}{dt} = mg\sin\alpha + \left(\Delta mgf\cos\alpha + \Delta mg\sin\alpha + \delta\Delta m\frac{dv}{dt}\right) \qquad (5)$$

Therefore, Equation 6 may be obtained by bringing Equation 3 into Equation 5:

$$\tan\theta = \tan\alpha + \left(\Delta mgf + \Delta mg\sin\alpha + \delta\Delta m\frac{dv}{dt}\right)\Big/mg \qquad (6)$$

Equation 7 is obtained by mathematical transformation:

$$\tan\theta = \tan\alpha + \Delta\tan\alpha \qquad (7)$$

In this way, the relationship of the slope indication value and the actual slope can be compared, and the slope indication value $\theta$ is greater than the actual slope $\alpha$.

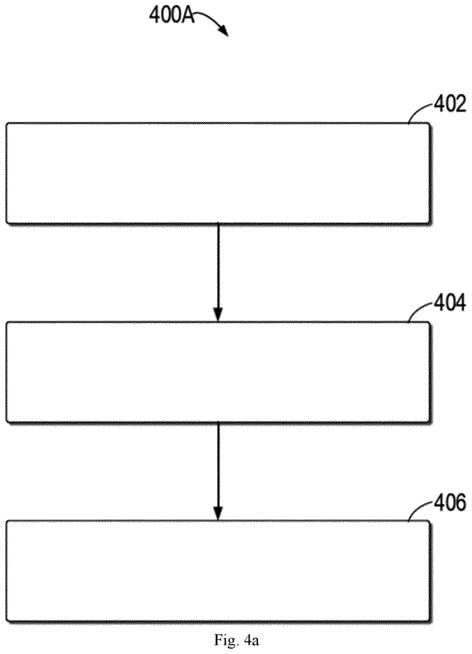

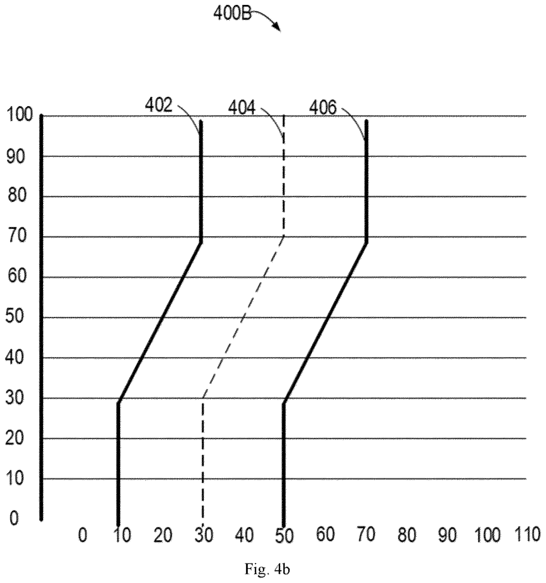

Fig. 4A is a flow chart of a method 400 for determining a target shift point according to an example of the present disclosure. Fig. 4B is a schematic diagram 400B of a shift line according to an example of the present disclosure. In block 402, an initial shift line, an initial slope indication value, a maximum shift line, and a maximum slope indication value are selected based on the gear of the vehicle. For example, in conjunction with Fig. 4B, schematic diagram 400B is the shift line for upshifting from the second gear to the third gear, the abscissa is the speed value, and the ordinate is the throttle opening, wherein the shift line 402 is the initial shift line of the vehicle, i.e., the corresponding shift line of the vehicle with no load and on a flat road, and 406 is the maximum shift line of the vehicle, i.e., the shift line corresponding to the full load and maximum slope of the vehicle. The weight of full load and maximum slope are related to the vehicle, for example, the full load weight of the vehicle is 50 tons and the vehicle can be driven on a maximum ramp of 45%. In some examples, the initial shift line and the maximum shift line are predetermined. For example, when the vehicle is driven with no load and on a flat road, the initial shift line is obtained by experimental calibration, and the corresponding initial slope indication value is calculated. It should be understood that although the vehicle is being driven on a flat road and the actual slope is 0%, since the slope indication value takes into account vehicle weight, the initial slope indication value is not necessarily 0%, but is calculated through Equation 3 described above. Further, when the vehicle is driven with a full load and on a maximum slope, the maximum shift line is determined by experimental calibration, and the corresponding maximum slope indication value is calculated through Equation 3 described above. It should be understood that the corresponding initial shift line and maximum shift line of different gears are different, and the lower the gear, the better the power, the greater the transmission speed, and the greater the torque transmitted to the wheel end.

In block 404, the initial shift point and maximum shift point are determined based on the throttle opening, the initial shift line, and the maximum shift line. For example, in conjunction with Fig. 4B, when the throttle opening is 30%, the corresponding initial shift point is 10 and the maximum shift point is 50. Different throttle openings correspond to different shift points, for example, when the throttle opening is between 30% and 70%, the shift point increases as the throttle opening increases. It should be understood that the shift lines given by the examples of the present disclosure are used by way of example only, and that the actual shift lines should be calibrated according to the vehicle.

In block 406, a first difference is determined based on the slope indication value and the initial slope indication value, and a second difference is determined based on the slope indication value and the maximum slope indication value. For example, in some examples, the slope indication value is 30%, the initial slope indication value obtained in block 402 is 10%, and the maximum slope indication value is 50%, and therefore the first difference is 20%, and the second difference is 20%. In block 408, the target shift point is determined based on the slope indication value, the first difference, the second difference, the initial shift point, and the maximum shift point. For example, as described above, the first difference is 20%, the second difference is 20%, the initial shift point is 10 and the maximum shift point is 50, so the target shift point can be calculated to be 30 based on the difference method, i.e. (maximum slope indication value - slope indication value) / slope indication value - initial slope indication value) = (maximum shift point - target shift point) / (target shift point - initial shift point). In conjunction with Fig. 4B, wherein the shift line 404 is the "target shift line," i.e., the corresponding shift line of the vehicle at the slope indication value can be calculated through the process described above to obtain the target shift point, so it is not necessary to pre-determine the target shift line, but only the initial shift line and maximum shift line need to be calibrated by experiment.

Further, whether the target shift point obtained through the method 400A is the expected shift point may be verified by experimentation. For example, tests may be conducted in some predetermined working conditions, for example, on a flat road surface, with the accelerator pedal at 50% and the vehicle moving from rest; on a road surface with a slope of 20%, with the accelerator pedal at the same percentage and the vehicle moving from rest; on a road surface with a slope of 20%, with the vehicle having a full load and the vehicle moving from rest. Record the shift lines and shifting forces in the working conditions described above. A comparison reveals that as the slope and vehicle weight increase, the shift lines and shifting forces gradually increase. Then, record the corresponding target shift points, and make adjustments accordingly.

Through the method 400A according to an example of the present disclosure, the target shift point may be determined based on the slope indication value, and since the calculation of the slope indication value does not require the actual slope and vehicle weight, the shifting of the vehicle may also be optimized based on the slope indication value in the absence of a slope sensor and gravity sensor. Further, data acquisition costs are reduced while computational efficiency is improved as the calculation of the slope indication value does not require additional data from other sensors.

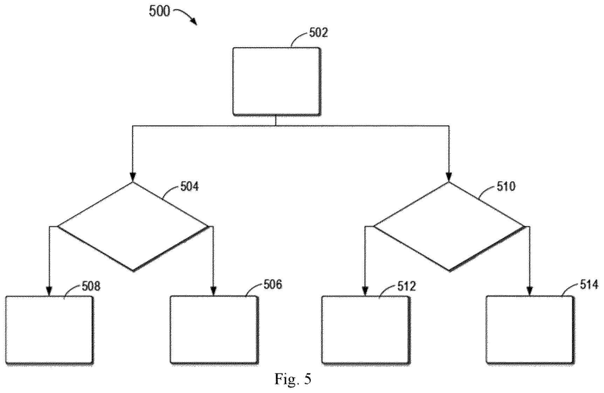

Fig. 5 is a flow chart of a method 500 for adjusting the slope indication value according to an example of the present disclosure. In some examples, the slope indication value for the vehicle may be calculated using the real-time parameters of Formula 3 when the vehicle is being driven, but in some cases, the slope indication value obtained with Formula 3 is not the expected slope indication value. For example, in some examples, the braking resistance is increased when the vehicle is braking, and therefore the expected slope indication value cannot be obtained using Formula 3. In some examples, when the vehicle is in the shifting process, the vehicle is unable to transmit torque. Therefore, the actual drive force is 0 and the expected slope indication value cannot be obtained. Therefore, in these cases, the slope indication value needs to be adjusted to ensure that a reasonable slope indication value is obtained. It should be understood that the duration of both braking and shifting is relatively short, so the effect on the target shift point is relatively small after adjustment.

In block 502, the brake opening and gear state are obtained. For example, in some examples, the brake opening may be obtained from the VCU 102 shown in Fig. 1, the brake opening indicates the position of the brake pedal, the gear state may be obtained from the TCU 104 shown in Fig. 1, and the gear state indicates whether the vehicle is in the braking process. In block 504, whether the brake opening is greater than the brake opening threshold is determined. For example, the slope indication value needs to be adjusted if the brake opening is 15% but the brake opening threshold is 10%. In response to the brake opening being greater than the brake opening threshold, proceed to block 506 and adjust the slope indication value. For example, since the brake opening is greater than the brake opening threshold, the calculated slope indication value is not the expected slope indication value at this point. Therefore, the slope indication value is adjusted to be consistent with the previously calculated slope indication value. Because the duration of the braking process is relatively short, the change in slope during braking is not very large either, so the actual slope indication value differs little from the previously calculated slope indication value, and the previously calculated slope indication value can be used to determine the target shift point. In block 504, if the brake opening is greater than the brake opening threshold, proceed to block 508 without adjusting the slope indication value. At this point, since the brake opening is less than the brake opening threshold, there is no need to adjust the slope indication value and the resulting slope indication value is directly used to determine the target shift point.

In block 510, whether the vehicle is in the shifting process is determined based on the gear state. For example, when it is determined through the gear state that the vehicle is in the shifting process, such as the process of upshifting from the second gear to the third gear, an adjustment to the slope indication value is required. If the vehicle is in the shifting process, proceed to block 512 and adjust the slope indication value. For example, since the vehicle is in the shifting process and the vehicle does not transmit torque, the drive force is 0 and the calculated slope indication value is not the expected slope indication value at this point. Therefore, the slope indication value is adjusted to be consistent with the previously calculated slope indication value. Because the duration of the shifting process is relatively short, the change in the slope during shifting is not very large either, so the actual slope indication value differs little from the previously calculated slope indication value, and the previously calculated slope indication value can be used to determine the target shift point. In block 510, in response to the vehicle not being in the shifting process, proceed to block 514 without adjusting the slope indication value. At this point, since the vehicle is not in the shifting process, there is no need to adjust the slope indication value and the resulting slope indication value is directly used to determine the target shift point.

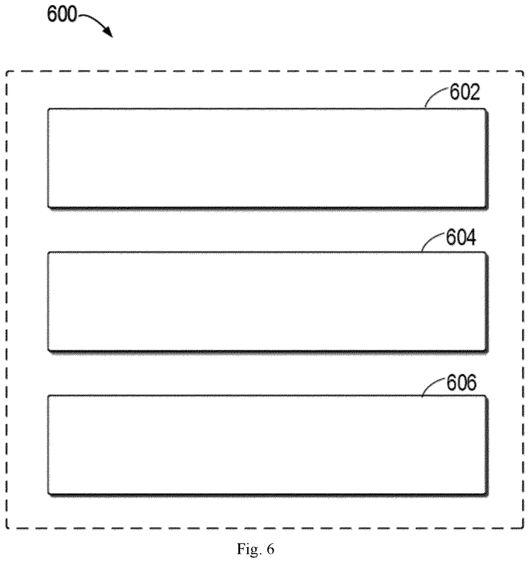

Fig. 6 illustrates a schematic diagram of an apparatus 600 for determining a target shift point, according to an example of the present disclosure. The apparatus 600 may include a plurality of modules for performing the corresponding steps in the method 200 as discussed in Fig. 2. As shown in Fig. 6, the apparatus 600 includes a slope drag determination unit, which is configured to determine the slope drag of the vehicle based on the drive force, rolling resistance, air resistance, and acceleration resistance of the vehicle. The apparatus 600 further includes a slope indication value determination unit, which is configured to determine the slope indication value for the vehicle based on the slope drag and reference mass of the vehicle, wherein the slope indication value is associated with the slope of the vehicle. Further, the apparatus 600 further includes a target shift point determination unit, which is configured to determine a target shift point of the vehicle in slope condition based on the slope indication value, and the gear and throttle opening of the vehicle.

In some examples, wherein the slope indication value determination unit includes a slope indication tangent determination unit, which is configured to determine the tangent value of the slope indication value based on the drive force, rolling resistance, air resistance, acceleration resistance, and reference mass of the vehicle; and a slope indication second determination unit, which is configured to determine the slope indication value based on the tangent value of the slope indication value.

In some examples, the apparatus 600 further includes a drive force determination unit, which is configured to determine the drive force based on the engine torque, transmission ratio, transmission efficiency, and tire radius of the vehicle.

In some examples, the apparatus 600 further includes a rolling resistance determination unit, which is configured to determine the rolling resistance based on the reference mass and gravitational acceleration of the vehicle, and the cosine value of the slope, wherein the cosine value of the slope is set as a predetermined value.

In some examples, the apparatus 600 further includes an air resistance determination unit, which is configured to determine the air resistance based on the speed, air density, wind-facing area and air resistance coefficient of the vehicle.

In some examples, the apparatus 600 further includes an acceleration resistance determination unit, which is configured to determine the acceleration resistance based on the reference mass, rotational mass coefficient, and acceleration of the vehicle. In some examples, the target shift point determination unit further includes a shift information acquisition unit, which is configured to obtain the initial shift line, initial slope indication value, maximum shift line, and maximum slope indication value based on the gear of the vehicle, wherein the initial shift line and the initial slope indication value correspond to the shift line and slope indication value when the vehicle has an empty load and is on a flat road, the maximum shift line and maximum slope indication value correspond to the shift line and slope indication value when the vehicle has a full load and is on a maximum slope; and a target shift point second determination unit, which is configured to determine the target shift point based on the throttle opening, slope indication value, initial shift line, initial slope indication value, maximum shift line, and maximum slope indication value.

In some examples, the target shift point second determination unit includes a reference shift point determination unit that determines the initial shift point and maximum shift point based on the throttle opening, initial shift line and maximum shift line; a first difference determination unit, which is configured to determine the first difference based on the slope indication value and the initial slope indication value; a second difference determination unit, which is configured to determine the second difference based on the slope indication value and maximum slope indication value; and a target shift point third determination unit, which is configured to determine the target shift point based on the slope indication value, first difference, second difference, initial shift point, and maximum shift point.

In some examples, the apparatus 600 further includes a gear braking acquisition unit, which is configured to obtain the brake opening or gear state of the vehicle; and a slope indication value adjustment unit, which is configured to adjust the slope indication value based on the brake opening or gear state.

In some examples, the slope indication value adjustment unit includes a brake opening determination unit, which is configured to determine whether the brake opening is greater than the brake opening threshold; and a slope indication value second adjustment unit, which is configured to adjust the slope indication value to be consistent with the previous slope indication value in response to the brake opening being greater than the brake opening threshold.

In some examples, the slope indication value adjustment unit includes a shifting process determination unit, which is configured to determine whether the gear state indicates that the vehicle is in the shifting process; and a slope indication value third adjustment unit, which is configured to adjust the slope indication value to be consistent with the previous slope indication value in response to the gear state indicating that the vehicle is in the shifting process.

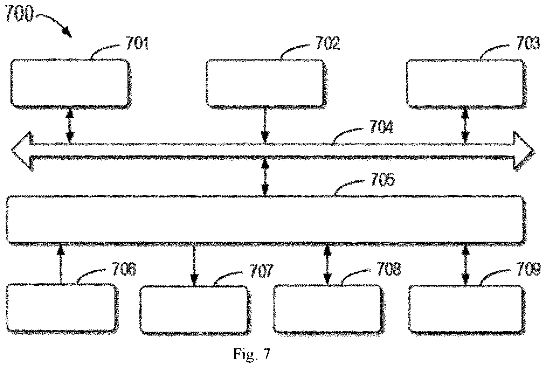

Fig. 7 shows a schematic block diagram of an exemplary device 700 that may be used to implement an example of the present disclosure. As shown in the Fig., the device 700 includes a central processing unit (CPU) 701 that is capable of performing various appropriate actions and processing according to computer program instructions stored in a read-only memory (ROM) 702 or computer program instructions loaded into random access memory (RAM) 703 from a storage unit 708. Various programs and data required for device 700 operations may be stored in the RAM 703. The CPU 701, ROM 702, and RAM 703 are connected to each other by a bus 704. An input/output (I/O) interface 705 is also connected to the bus 904.

A plurality of components in the device 700 are connected to the I/O interface 705, which may include, for example an input unit 706, such as a keyboard, mouse, and the like; an output unit 707, such as various types of display, speaker, and the like; a memory 708, such as a disk, optical disc, and the like; and a communication unit 709, such as a network interface card, modem, wireless transceiver, and the like. The communication unit 709 allows the device 700 to exchange information/data with other devices through computer networks such as the Internet and/or various telecommunications networks.

The various processes and processing described above may be executed by the processing unit 701. For example, in some examples, the method 200 may be implemented as a computer software program that is tangibly contained in a machine-readable medium, such as the storage unit 708. In some examples, a computer program, whether in part or in full, may be loaded and/or installed onto the device 700 via the ROM 702 and/or the communication unit 709. When the computer program is loaded onto the RAM 703 and executed by the CPU 701, one or more actions of the method 200 described above may be performed.

The present disclosure may be a method, an apparatus, a system, and/or a computer program product. The computer program product may include a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) include portable computer disk, hard disk, RAM, ROM, erasable programmable read-only memory (EPROM or flash), static random access memory (SRAM), portable compact disc read-only memory (CD-ROM), digital versatile disc (DVD), memory stick, floppy disk, mechanical encoder, such as punched card stored with instructions or a structure with a protrusion in a groove, as well as any suitable combinations of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

Computer-readable program instructions described here may be downloaded to various computing/processing devices from computer-readable storage media, or downloaded from networks, such as the Internet, local area network, wide-area network and/or wireless network to external computers or external storage devices. Networks may include copper transmission cables, optical fiber transmissions, wireless transmissions, routers, firewalls, switches, gateway computers, and/or edge servers. The network adapter card or network interface in every computing/processing device receives the computer-readable program instructions from the network and forwards the computer-readable program instructions for storage in computer-readable storage media in the various computing/processing devices.

The computer program instructions used to perform the operations of the present disclosure may be assembly instructions, instruction set architecture (ISA) instructions, machine instructions, machine-related instructions, microcode, firmware instructions, state set data, or source code or object code written with any combination of one or many programming languages. The programming language includes object-oriented programming languages such as Smalltalk, C++, and the like, as well as conventional procedural programming languages such as "C" language or similar programming languages. Computer-readable program instructions can be fully executed on the user's computer, partially executed on the user's computer, executed as an independent software package, partially executed on the user's computer and partially executed on a remote computer or fully executed on a remote computer or server. Where a remote computer is involved, the remote computer can be connected to the user's computer through any type of network, including local area network (LAN) or wide area network (WAN), or it may be connected to an external computer (such as by using an Internet service provider for Internet connection). In some examples, the state information of computer-readable program instructions is used to personalize custom electronic circuits, such as programmable logic circuit, field-programmable gate array (FPGA) or programmable logic array (PLA). This electronic circuit is able to execute computer-readable program instructions, thereby achieving the various aspects of the present disclosure.

This refers to various aspects of the present disclosure that are described based on the flow chart and/or block diagram of the method, apparatus (system) and computer program product according to the examples of the present disclosure. It should be understood that every block in the flow chart and/or block diagram and the combinations of various blocks in the flow chart and/or block diagram may be implemented by computer-readable program instructions.

These computer-readable program instructions may be provided to general-purpose computers, dedicated computers or the processing unit of other programmable data processing apparatuses, thereby producing a type of machine, so that these instructions produce the apparatus that implements the function/action stipulated in one or a plurality of blocks in the flow chart and/or block diagram through computers or processing units of other programmable data processing apparatuses. These computer-readable program instructions may also be stored in computer-readable storage media. These instructions allow computers, programmable data processing apparatuses and/or other devices to work in a certain way. Therefore, computer-readable media that store the instructions include a manufactured product, which includes the instructions that implement various aspects of functions/actions stipulated in one or many blocks in the flow chart and/or block diagram.

Computer-readable program instructions may also be loaded onto the computer, other programmable data processing apparatuses or other devices to execute a series of operating steps on the computer, other programmable data processing apparatuses or other devices, thereby allowing the instructions executed on the computer, other programmable data processing apparatuses or other devices to implement functions/actions stipulated in one or many boxes in the flow chart and/or block diagram.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions. The part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be basically concurrently performed and they may also sometimes be performed in the opposite sequence. This is determined based on the function involved. It must be noted that every block in the block diagram and/or flow chart, as well as combinations of blocks in the block diagram and/or flow chart may be implemented by dedicated hardware-based systems used to perform the stipulated function or action, or implemented by using combinations of dedicated hardware and computer instructions.

The various examples of the present disclosure have been described above and the description is illustrative and not exhaustive, and it is also not limited to the various examples disclosed. Without deviating from the scope and spirit of the various examples described, many amendments and changes are obvious to those skilled in the art. The selection of terms used in this text aims to best explain the principles and actual application of the various examples, the technological improvements in the market, or allow others skilled in the art to understand the various examples disclosed in this text.

## Claims

1. A method for determining a shift point of a vehicle, including

   determining the slope drag of the vehicle based on the drive force, rolling resistance, air resistance, and acceleration resistance of the vehicle.
   determining the slope indication value for the vehicle based on the slope drag and reference mass of the vehicle, wherein the slope indication value is associated with the slope of the vehicle; and
   determining a target shift point of the vehicle in slope condition based on the slope indication value, and the gear and throttle opening of the vehicle.

2. The method according to Claim 1, wherein determining the slope indication value includes
   determining the tangent value of the slope indication value based on the drive force, the rolling resistance, the air resistance, the acceleration resistance, and the reference mass of the vehicle; and determining the slope indication value based on the tangent value of the slope indication value.

3. The method according to Claim 2, further including
determining the drive force based on the engine torque, transmission ratio, transmission efficiency, and tire radius of the vehicle.

4. The method according to Claim 2, further including
determining the rolling resistance based on the reference mass and gravitational acceleration of the vehicle, and the cosine value of the slope, wherein the cosine value of the slope is set as a predetermined value.

5. The method according to Claim 2, further including
determining the air resistance based on the speed, air density, wind-facing area, and air resistance coefficient of the vehicle.

6. The method according to Claim 2, further including
determining the acceleration resistance based on the reference mass, rotational mass coefficient, and acceleration of the vehicle.

7. The method according to Claim 1, wherein determining the target shift point of the vehicle in slope condition includes

obtaining the initial shift line, initial slope indication value, maximum shift line, and maximum slope indication value based on the gear of the vehicle, wherein the initial shift line and the initial slope indication value correspond to the shift line and slope indication value when the vehicle has an empty load and is on a flat road, the maximum shift line and maximum slope indication value correspond to the shift line and slope indication value when the vehicle has a full load and is on a maximum slope; and
determining the target shift point based on the throttle opening, the slope indication value, the initial shift line, the initial slope indication value, the maximum shift line, and the maximum slope indication value.

8. The method according to Claim 7, wherein determining the target shift point includes

determining the initial shift point and maximum shift point based on the throttle opening, the initial shift line, and the maximum shift line;
determining a first difference based on the slope indication value and the initial slope indication value;
determining a second difference based on the slope indication value and the maximum slope indication value; and
determining the target shift point based on the slope indication value, the first difference, the second difference, the initial shift point, and the maximum shift point.

9. The method according to Claim 1, further including

obtaining the brake opening or gear state of the vehicle; and
adjusting the slope indication value based on the brake opening or the gear state.

10. The method according to Claim 9, wherein adjusting the slope indication value includes

determining whether the brake opening is greater than the brake drive threshold; and
adjusting the slope indication value to be consistent with the previous slope indication value in response to the brake opening being greater than the brake opening threshold.

11. The method according to Claim 9, wherein adjusting the slope indication value includes

determining whether the gear state indicates that the vehicle is in the shifting process; and
adjusting the slope indication value to be consistent with the previous slope indication value in response to the gear state indicating that the vehicle is in the shifting process.

12. An apparatus for determining a shift point of a vehicle, including

a slope drag determination unit, which is configured to determine the slope drag of the vehicle based on the drive force, rolling resistance, air resistance, and acceleration resistance of the vehicle;

a slope indication value determination unit, which is configured to determine the slope indication value for the vehicle based on the slope drag and the reference mass of the vehicle, wherein the slope indication value is associated with the slope of the vehicle; and

a target shift point determination unit, which is configured to determine a target shift point of the vehicle in slope condition based on the slope indication value, and the gear and the throttle opening of the vehicle.

13. An electronic device including

at least one controller; and

a memory, coupled to the at least one controller, and having instructions stored thereon that, when executed by the at least one controller, cause the device to perform the method according to any one of Claims 1-11.

14. A vehicle including the electronic device according to Claim 13.

15. A computer readable storage medium having stored thereon computer executable instructions, wherein the computer executable instructions are executed by a controller to perform the method according to any one of Claims 1 - 11.

Fig. 1

Fig. 2

300A

302

304

306

Fig. 3a

Fig. 3b

400A

402

404

406

Fig. 4a

Fig. 4b

Fig. 5

600

602

604

606

Fig. 6

Fig. 7

**EP 4 521 002 A1**

Europäisches
Patentamt

European
Patent Office

Office européen
des brevets

# EUROPEAN SEARCH REPORT

Application Number

EP 24 19 1051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/035829 A1 (TIBERG RICHARD L [US]) 7 February 2013 (2013-02-07) * the whole document * | 1-15 | INV. F16H61/02 |
| X | US 2014/172252 A1 (SIEGEL BRYAN T [US] ET AL) 19 June 2014 (2014-06-19) * paragraphs [0037] - [0051]; figures * | 1-15 | |

TECHNICAL FIELDS
SEARCHED       (IPC)

F16H

The present search report has been drawn up for all claims

| Place of search | Date of completion of the search | Examiner |
|---|---|---|
| Munich | 8 January 2025 | Meritano, Luciano |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...........................................................................
& : member of the same patent family, corresponding
   document

EPO FORM 1503 03.82 (P04C01)

22

# ANNEX TO THE EUROPEAN SEARCH REPORT
## ON EUROPEAN PATENT APPLICATION NO.

EP 24 19 1051

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2025

| Patent document cited in search report | Publication date | Patent family member(s) | Publication date |
|---|---|---|---|
| US 2013035829 A1 | 07-02-2013 | CN 102910172 A<br>DE 102012213334 A1<br>US 2013035829 A1 | 06-02-2013<br>07-02-2013<br>07-02-2013 |
| US 2014172252 A1 | 19-06-2014 | CN 104937315 A<br>DE 112013005520 T5<br>US 2014172252 A1<br>WO 2014093151 A1 | 23-09-2015<br>05-11-2015<br>19-06-2014<br>19-06-2014 |

EPO FORM P0459

For more details about this annex : see Official Journal of the European Patent Office, No. 12/82